# EUROPÄISCHE PATENTSCHRIFT

(11) **EP 2 139 094 B1**
(45) Veröffentlichungstag und Bekanntmachung des Hinweises auf die Patenterteilung: **17.10.2018**
(21) Anmeldenummer: 08159055.6
(22) Anmeldetag: 26.06.2008
(51) Int. Cl.: H02K 3/52, H02K 7/00

(54) **Stator mit Verschaltungsanordnung einer elektrischen Maschine**
Stator and connecting arrangement of an electric machine
Stator et arrangement de connection d'une machine électrique

(43) Veröffentlichungstag der Anmeldung: 30.12.2009
(73) Patentinhaber: ZF Friedrichshafen AG, 88046 Friedrichshafen (DE)
(72) Erfinder: van Heyden, Marcus, 97456, Dittelbrunn (DE); Rönnebeck, Ralf, 97453, Schonungen-Forst (DE); Weidner, Matthias, 97535, Wasserlosen-Burghausen (DE); Schäflein, Alexander, 97422, Schweinfurt (DE)

(56) Entgegenhaltungen:
- EP-A- 1 050 948
- WO-A-02/073773
- WO-A-2007/136081
- DE-A1- 10 128 769
- JP-A- 6 233 483
- US-A1- 2003 201 688

## Beschreibung

Die Erfindung betrifft einen Stator für eine elektrische Maschine gemäß dem Oberbegriff des Patentanspruchs 1.

Ein gattungsgemäßer Stator wird beispielsweise in der DE 10 2006 021 898 A1 der Anmelderin der vorliegenden Erfindung beschrieben. Die Spulen sind aus einem Draht um zwei am Stator stirnseitig angeordnete Isolierkörper gewickelt, wobei die Spulenenden aus der Wickelebene in radialer Richtung abgebogen und an einem Isolierkörper in Drahtführungsabschnitte eingelegt sind, welche in den Aufnahmeraum einer die Verbindungsleiter beherbergenden Tragestruktur eintauchen. In diesem Aufnahmeraum sind die Spulenenden zur Verschaltung mit den Verbindungsleitern nochmals und zwar in Umfangsrichtung des Stators abgebogen. Bei der Montage des Stators der dort als Außenläufer ausgebildeten Elektromaschine werden zunächst die Statorspulen von radial außen auf die Statorzähne aufgeschoben und in einem weiteren Schritt wird die Tragestruktur mit den Verbindungsleitern von der, der Verschaltungsseite gegenüberliegenden Stirnseite des Stators her aufgeschoben bis diese an den Drahtführungsabschnitten zur Anlage kommt. Danach kann unter Mitwirkung von separaten Anschlusselementen die Verschaltung der Spulenenden mit den Verbindungsleitern erfolgen.

Die erläuterte Verschaltungseinrichtung ist bei einem Außenläufermotor vorteilhaft, jedoch bei einem Innenläufer nur bedingt anwendbar. Unabhängig von der Verschaltungsvariante ist die Handhabung der Spulenenden und insbesondere Biegestellen kritisch, weil an diesen die empfindliche Lackschicht aufreißen und Feuchtigkeit angreifen kann, welche in Folge zu Korrosionserscheinungen und zum Ausfall von Wicklungskomponenten führen kann.

Zusätzlich wird weiterer, jedoch nicht zur Gattung des Hauptanspruchs zählender Stand der Technik genannt, wobei die Verschaltung der Verbindungsleiter mit den Spulenanschlüssen außerhalb eines Trägerelementes oder ohne Mitwirkung eines solchen erfolgt. So offenbaren die US 2003/0201688 A1, die DE 101 28 769 A1 und die JP 06 233 483 A jeweils eine elektrische Maschine, deren Stator eine Mehrzahl von Einzelspulen trägt, welche mit ihren beiden Spulenanschlüssen mit jeweils zwei von insgesamt drei bzw. vier in einem Trägerelement angeordneten Ringleitern elektrisch verbunden sind. Dazu weisen die Ringleiter aus dem Trägerelement herausgeführte Anschlußbereiche auf, die die axial oder radial aus den Spulen austretenden Spulenenden räumlich außerhalb des Trägerelementes kontaktieren.

Die EP 1 050 948 A2 beschreibt eine grundsätzlich ebenso aufgebaute elektrische Maschine, wobei jedoch die Ringleiter lediglich unter Verwendung einer Isolierscheibe am Stator angeordnet und freitragend verschaltet sind. Bei der in der WO 02/073773 A1 erläuterten elektrische Maschine ist die Statorwicklung mittels mehreren bandförmigen, isolierbeschichteten Ringleitern ohne Verwendung eines Trägerelements elektrisch verschaltet.

Es ist die Aufgabe der vorliegenden Erfindung, einen Stator der vorgenannten Art so zu verbessern, dass insbesondere dessen Verschaltungseinrichtung prozesssicherer gestaltet, gegenüber Fertigungs- und Montagetoleranzen unempfindlich und gleichermaßen für einen Innen- oder Außenläufermotor geeignet ist.

Die Erfindung löst diese Aufgabe bei einem Stator der eingangs genannten Art durch die im Kennzeichen des Patentanspruchs 1 aufgeführten Merkmale. Vorteilhafte Ausgestaltungen der Erfindungen sind in den Unteransprüchen wiedergegeben.

Der erfindungsgemäße Stator zeichnet sich insbesondere dadurch aus, dass die Spulenanschlüsse bezüglich des Stators axial aus den Spulen austreten und dass in einem Wandungsbereich des Trägerelementes zu den Spulenanschlüssen korrespondierende Ausnehmungen ausgebildet sind, durch welche die Spulenanschlüsse in den Verschaltungsbereich des Trägerelements axial eingeführt sind, wobei der Wandungsbereich des Trägerelements den Austrittsbereich der Spulenanschlüsse aus den Spulen radial überdeckt.

Beim Bewickeln der Spulen wird durch den gewundenen Wickelleiter, z.B. einem Wickeldraht, eine Windungsebene definiert. Die vorgeschlagene Lösung bietet den Vorteil, dass die nach dem Bewickeln in einer Windungsebene liegenden Spulenanschlüsse axial ausgerichtet innerhalb dieser Windungsebene verbleiben können und für die Verschaltung mit den Verbindungsleitern zur Verfügung stehen. Dazu wird das die Verbindungsleiter beherbergende Tragelement an die Verschaltungsseite des Stators axial herangeführt, wobei die Spulenanschlüsse durch im Wandungsbereich vorgesehene Ausnehmungen in den Verschaltungsbereich eingeführt werden können. Bei erfolgter Anlage überdeckt der Wandungsbereich des Trägerelementes den Austrittsbereich der Spulenanschlüsse aus den Spulen. Somit ist der Übergang der Spulenanschlüsse in den Verschaltungsbereich möglich, ohne dass diese dazu aus deren Windungsebene abgebogen werden müssen.

Es ist fertigungstechnisch äußerst zweckmäßig, das Trägerelement als ein einseitig offenes Kunststoff-Profil mit einem Boden und mit daran anschließenden Seitenwandungen auszuführen, die den Verschaltungsbereich nach außen begrenzen. Zur gegenseitig isolierten Anordnung der Verbindungsleiter sind innerhalb des Trägerelementes mehrere Trennstege vorgesehen, die vorzugsweise integral mit dem Grundkörper des Trägerelementes eingebracht werden. Für die weitere Verschaltung ist es sinnvoll, wenn die Trennstege die Verbindungsleiter überragen, so dass ein elektrischer Kontakt zwischen einem Spulenanschluss nur an den dafür vorgesehenen Stellen erfolgt und ansonsten zwischen den potentialführenden Leitern Isolationszwischenräume erzeugt werden. Die Seitenwandungen sind so geformt, dass diese die Trennstege überragen. Damit wird als Verschaltungsbereich ein wannenförmiger Aufnahmeraum geschaffen, welcher mit einem Dichtmittel, z.B. mit einem Deckelement oder mit einem Harz, Silikon oder einem anderen Füllstoff dichtend verschlossen bzw. vergossen werden kann, wobei die Verbindungsleiter, die Wicklungsenden, die Spulenanschlüsse und deren gegenseitige Kontaktbereiche sowie die Fenster des Trägerelementes dichtend verschlossen sind.

Vorteilhafte Weiterbildungen und Ausgestaltungen der Erfindungen sind in den Unteransprüchen angegeben.

Mit Vorteil sind die Spulen mit zumindest einem Isolierkörper an den Zähnen angeordnet, wobei die Spulenanschlüsse in dem Isolierkörper verlegt sind. Ein solcher Isolier- bzw. Wickelkörper isoliert den Spulenleiter gegenüber dem Statorjoch und begrenzt gleichzeitig einen Wickelbereich, so dass die Spule kompakt und dauerhaft formstabil ausgebildet werden kann.

Mit besonderem Vorteil kann sich das Trägerelement an mehreren Isolierkörpern am Stator abstützen, wobei diese zumindest eine gemeinsame axiale und/oder radiale Anlagefläche ausbilden.

Die zur Verschaltung mit den Verbindungsleitern vorgesehenen Spulenanschlüsse können direkt durch die Wicklungsenden der Spulen gebildet werden. Alternativ können die Wicklungsenden auch an den Isolier- bzw. Wickelkörpern zugentlastet festgelegt sein und dort mit Kontaktabschnitten von Kontaktelementen verbunden sein, welche ebenfalls an den Wickelkörpern fixiert sind und in diesem Fall die Spulenanschlüsse ausbilden. Auch hierbei verbleiben die Wicklungsenden axial ausgerichtet in der Windungsebene und bei der Montage der Spulen und der Verschaltungseinrichtung am Stator kräftefrei.

Gemäß einer bevorzugten Ausführungsform sind die Kontaktabschnitte mit den dort verbundenen Wicklungsenden ebenfalls durch die Fenster bzw. Ausnehmungen des Trägerelementes in den Verschaltungsbereich des Trägerelementes axial eingeführt.

Zur Überbrückung der Isolationszwischenräume und der Erzeugung eines Kontaktbereiches zwischen den Spulenanschlüssen und den Verbindungsleitern weisen die Verbindungsleiter an vorbestimmten Positionen von diesen zur offenen Seite des Verschaltungsbereiches abstehende Anschlussbereiche auf. Diese Anschlussbereiche können auf einfache Art und Weise als Präge- oder Stanzelemente an den Verbindungsleitern ausgebildet werden. Als Verbindungsleiter eignet sich besonders ein band- oder drahtförmiges Material mit einem geringen elektrischen Widerstand, bevorzugt Kupfer, welches zur Anordnung in dem Verschaltungsbereich in eine Ringform gebogen ist. Die ringförmigen Verbindungsleiter können in Umfangsrichtung geschlossen oder bevorzugt offen sein, um bei thermisch induzierten Längenänderungen einen Bewegungsspielraum zu haben.

Die Verbindungsleiter können axial gestaffelt am Stator angeordnet sein. In diesem Fall kann das Trägerelement mit einer Seitenwandung am Stator anliegen und sich dort abstützen, wobei die durch die Ausnehmungen in den Verschaltungsbereich ragenden Spulenanschlüsse unmittelbar verschaltet werden können.

Gemäß einer dazu alternativen Variante können die Verbindungsleiter auch radial gestaffelt am Stator angeordnet werden, wobei das Trägerelement mit einem der offenen Seite gegenüberliegenden Bodenbereich am Stator anliegen kann und sich dort abstützen kann. Die durch die Ausnehmungen axial in den Verschaltungsbereich ragenden Spulenanschlüsse werden innerhalb des Verschaltungsbereiches um 90° radial abgebogen, so dass diese die Verbindungsleiter kreuzen und mittels der von diesen abstehenden Anschlussbereiche verschaltet werden können.

Zum Anschluss des Stators an eine Stromversorgungseinrichtung sind die Verbindungsleiter mit Anschlussleitern verbunden, welche gleichfalls in einen am Trägerelement ausgebildeten Einlegeabschnitt angeordnet sind und dort ebenfalls mit einem Dichtmittel vergossen werden können.

Die Erfindung wird im Folgenden mittels der beigefügten Figuren beispielhaft erläutert. Es zeigen:
- Fig. 1: eine schematische Darstellung einer elektrischen Maschine in Innenläuferbauart;
- Fig.2: ein mit einer Einzelspule bestücktes T-förmiges Statorsegment der in Fig. 1 gezeigten elektrischen Maschine;
- Fig. 3: einen ringförmigen Verbindungsleiter mit einem daran angeordneten Anschlussleiter;
- Fig. 4: eine vormontierte Baueinheit aus einem Trägerelement, einem Einlegeabschnitt und einem Anschlussgehäuseteil mit darin angeordneten Stromleitern;
- Fig. 5: ein Ausschnitt des Trägerelementes in einer perspektivischen Schnittdarstellung;

- Fig. 6: ein Ausschnitt eines mit Einzelspulen bestückten Stators mit einer Verschaltungseinrichtung in einer perspektivischen Darstellung.

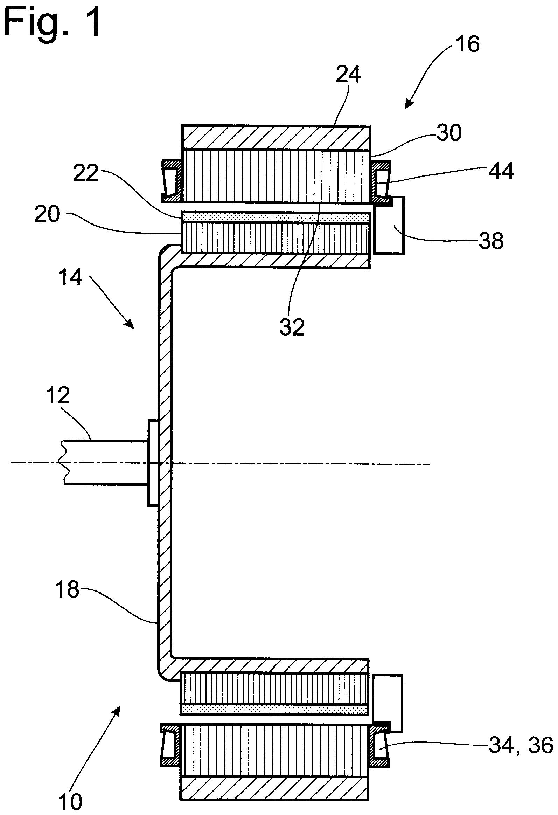

Fig. 1 zeigt schematisch eine elektrische Maschine 10, genauer eine permanenterregte elektrische Synchronmaschine in Innenläuferbauart, mit einem um eine Rotorwelle 12 drehbaren Rotor 14 und mit einem diesen radial außen umgebenden Stator 16. Der Rotor 14 umfasst einen topfförmigen, aus einem Stahlblech umgeformten Rotorträger 18, auf dessen zylindrischen Außenumfangsfläche ein lamelliertes Rotorblechpaket 20 angeordnet ist, welches eine Mehrzahl von gegenseitig beabstandeten Permanentmagneten 22 trägt.

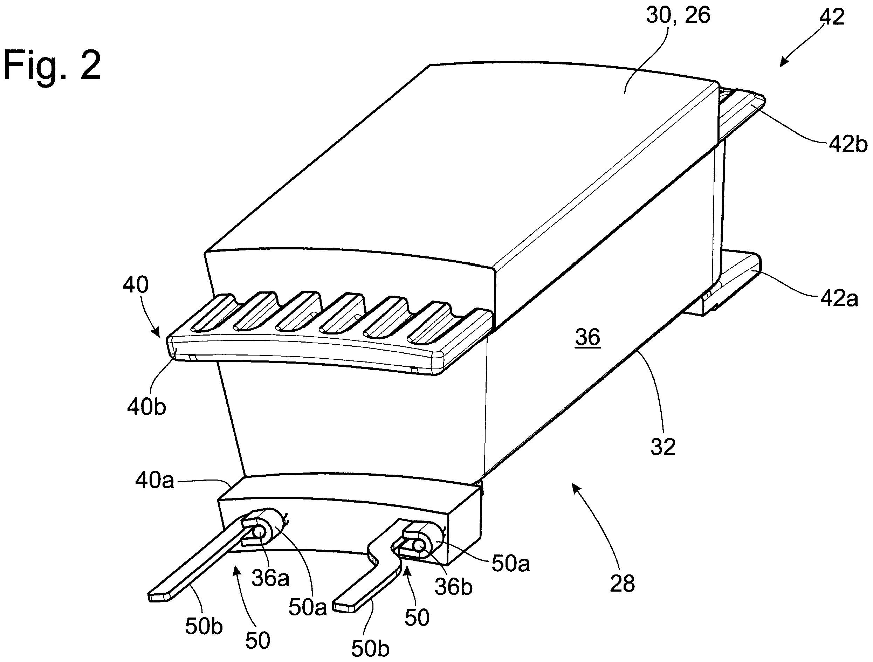

Der Stator 16 umfasst einen metallischen, beispielsweise aus einem Aluminium- oder einem Stahlwerkstoff hergestellten ringförmigen Statorträger 24, in dessen Ausnehmung ein ebenfalls aus Blechlamellen gebildetes kreisringförmiges Statorblechpaket 26 angeordnet ist. Der Statorträger 24 kann damit ein Außen- oder ein Zwischengehäuse der elektrischen Maschine 10 darstellen. Das Statorblechpaket 26 ist hierbei segmentiert ausgeführt und aus einer Mehrzahl von identischen, T-förmigen Statorsegmenten 28 (Fig. 2) zusammengefügt, die von dem Statorträger 24 aufgenommen und zusammengehalten werden.

Jedes der Statorsegmente 28 weist einen Jochbereich 30 und einen am Stator 16 nach radial innen gerichteten Zahn 32 auf, welcher zur Bildung der Wicklung 34 mit einer Einzelspule 36 bestückt ist. Die Spulenenden der Einzelspulen 36 sind, wie dieses im weiteren Verlauf der Beschreibung noch ausführlicher erläutert wird, mittels einer in Fig. 1 nur schematisch dargestellten Verschaltungseinrichtung 38 verschaltet und mit einer zeichnerisch nicht dargestellten Leistungselektronik verbunden, welche zum Betreiben der elektrischen Maschine 10 die Wicklung 34 mit einem Strom variabler Phase und Amplitude beaufschlagen kann.

Die Einzelspulen 36 werden vor der Montage des Stators 16 mit Hilfe von jeweils zwei, aus einem wärmebeständigen Kunststoff bestehenden Isolier- bzw. Wickelkörpern 40, 42 aus einem Kupferdraht um die Zähne 32 gewickelt und sind dort durch einen radial innen ausgebildeten, in den Figuren 1, 2 verdeckten Zahnkopf gegen Verrutschen gesichert. Die Wickelkörper 40, 42 umfassen jeweils einen stirnseitig am Blechpaket 26 anliegenden Basisbereich 44 (Fig. 1) und zwei davon etwa rechtwinklig abstehende Schenkel 40a, b; 42a, b die den Wickelbereich in radialer Richtung begrenzen. Die Isolierkörper 40, 42 können auch gleichzeitig die Längsseiten der Zähne 32 abdecken und zudem einteilig, d.h. gemeinsam ausgeführt sein, wobei zumindest eine Trennfuge zu deren Montage an den Zähnen 32 vorgesehen ist. Zum Ausgleich von Toleranzen ist im Bereich der Trennfuge eine gegenseitige Überlappung der Teilbereiche vorteilhaft.

Alternativ zu vorgefertigten Isolierkörpern 40, 42 können die Zähne 32 zur Bildung der Isolierkörper auch an den Längs- und Stirnseiten mit einem Kunststoff umspritzt werden, so dass die gesamte, den Wickelbereich begrenzende Umfangsfläche eines Zahns 32 isoliert ist.

An einer Stirnseite des Stators 16 sind an den radial inneren Schenkeln 40a der Isolierkörper 40 jeweils zwei Kontaktelemente 50 festgelegt, die dort eingesteckt oder beim Spritzgießen der Isolierkörper 40 als Einlegeteil teilweise umspritzt werden, wobei jedes der vom Isolierkörper 40 bezüglich des Stators 16 axial austretenden Kontaktelemente 50 einen U-förmig gebogenen Kontaktabschnitt 50a und einen streifenförmigen Kontaktabschnitt 50b in Form eines Pins aufweist. In den U-förmigen Kontaktabschnitt 50a wird jeweils ein vom Wickelbereich kommendes und innerhalb des Schenkels 46a in einer Nut geführtes Wicklungsende 36a, b eingelegt und dort vorzugsweise stoffschlüssig z.B. durch Verlöten oder Verschweißen verbunden und damit zugentlastet festgelegt. In Fig. 2 ist die vorgenannte Nut nicht sichtbar, da diese dort durch die Wicklung überdeckt ist. Es ist zu erkennen, dass die Pins 50b zunächst mit deren gesamten Länge vollständig bezüglich des Stators axial abragen, was für die nachfolgende Verschaltung erforderlich ist. Das in Fig. 2 rechts dargestellte Pin 50b ist innerhalb dessen Erstreckung gekröpft ausgeführt, was jedoch lediglich aus Bauraumgründen für die Anordnung am Stator erfolgt ist.

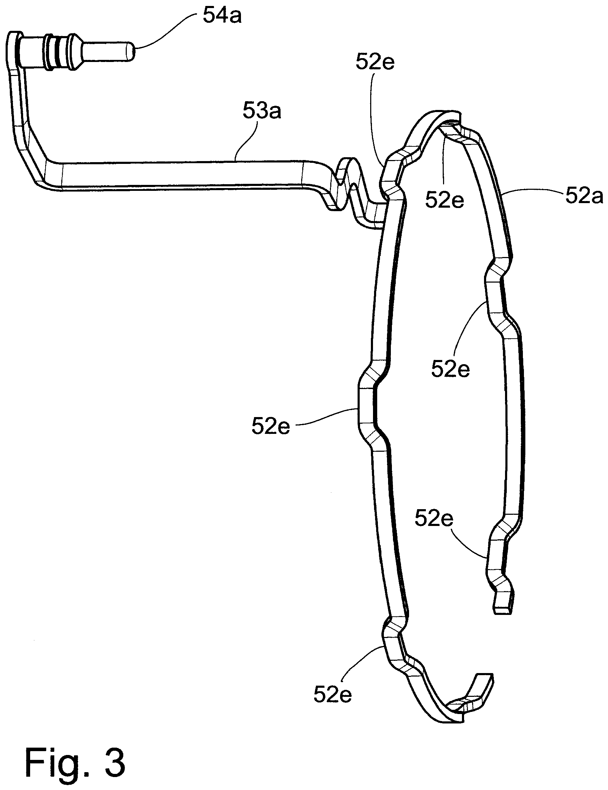

Die Spulen 36 sind elektrisch einzelnen Strängen zugeordnet und werden, wie weiter unten noch ausgeführt, mittels der Verschaltungseinrichtung 38 über gemeinsame Verbindungsleiter 52a-c, von denen in Fig. 3 lediglich der Verbindungsleiter 52a exemplarisch dargestellt ist, in einer vorbestimmten Weise miteinander verschaltet. Die Verbindungsleiter 52a-c sind als Bandleiter aus Kupfer ausgeführt und zu einem bevorzugt offenen Ring gebogen. Mit jedem der Verbindungsleiter 52a-c ist ein ebenfalls aus Kupfer gefertigter bandförmiger Anschlussleiter 53a-c verbunden, dessen freies Ende eine Öse aufweist, in welche zum Anschluss eines Stromkabels ein Kontaktbolzen 54a-c eingelötet oder verschweißt ist. Zur Verbindung mit den Spulenanschlüssen 50b weisen die Verbindungsleiter 52a-c gegenüber deren Grundkörper überhöhte Anschlussbereiche 52 auf, die im vorliegenden Beispiel durch einen Umformprozess ausgebildet wurden.

Im erläuterten Ausführungsbeispiel sind die Spulen 36 nach einer Dreieckschaltung verschaltet. Jedoch ist die jeweilige Verschaltungsart für die nachfolgenden Erläuterungen unerheblich, d.h. alternativ könnte auch unter Verwendung eines weiteren, vierten Verbindungsleiters eine Sternschaltung oder eine noch andere Verschaltung verwirklicht werden.

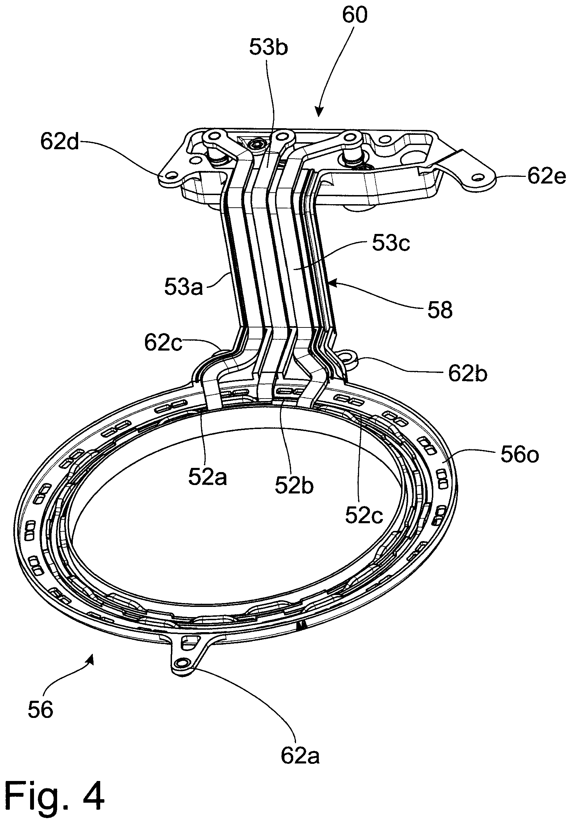

Zur Anordnung der Verbindungsleiter 52a-c am Stator 16 sind diese von einem als Kunststoff ausgebildeten ringförmigen Trägerelement 56 aufgenommen, wie in Fig. 4 gezeigt. Das Trägerelement 56 stützt sich in Fig. 1 axial an den Isolierkörpern 40 der Spulen 36 ab und wird durch die von diesen definierte Innenumfangsfläche gleichzeitig auch radial zentriert. An dem Trägerelement 56 ist außerdem ein nach radial außen gerichteter Einlegeabschnitt 58 zur gegenseitig isolierten Aufnahme der drei Anschlussleiter 53a-c ausgebildet bzw. angeordnet, welcher an dessen freien Ende ein Anschlussgehäuseteil 60 zur Aufnahme und Verbindung der Kontaktbolzen 54a-c ausbildet. Zur Festlegung am Statorträger 24 umfasst die aus den Elementen 56, 58, 60 gebildete und vorzugsweise als Spritzgussteilen hergestellte Baueinheit mehrere Befestigungsabschnitte 62a-e auf, die mittels Schraubbolzen mit dem Statorträger 24 verschraubt werden. Alternativ oder zusätzlich kann dort auch eine Rastvorrichtung ausgeführt sein.

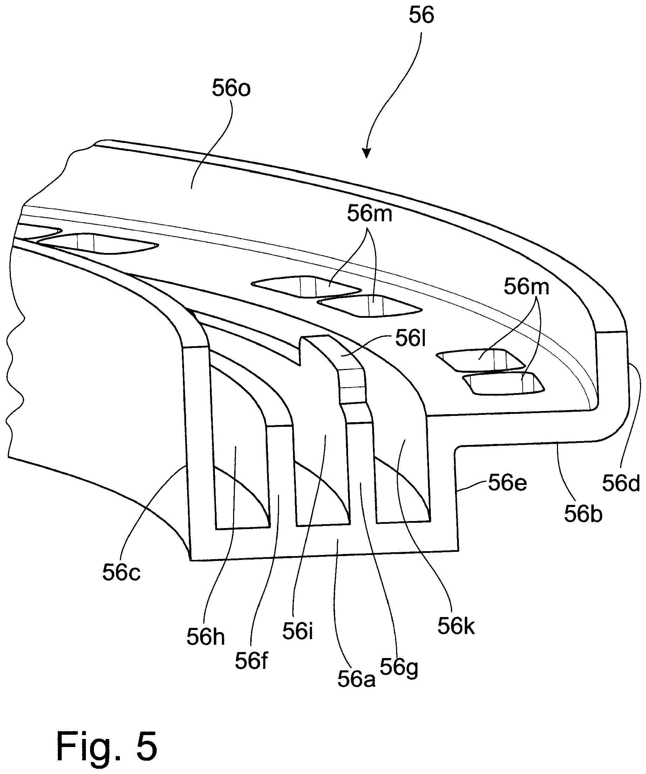

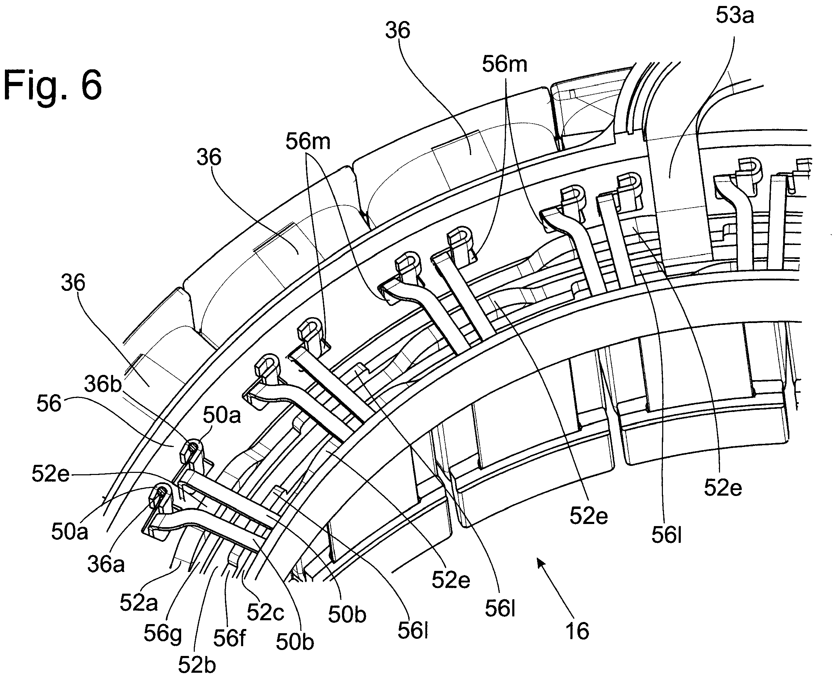

Fig. 5 zeigt ausschnittweise eine perspektivische Schnittdarstellung der Tragestruktur 56, welche als einseitig offenes Profil mit einem gestuften Boden 56a, b und senkrecht davon abstehenden Seitenwandungen 56c, d, e ausgeführt und durch Trennstege 56f, g zur isolierten Anordnung der Verbindungsleiter 52a-c in mehrere Ringkammern 56h-k unterteilt ist. Es ist erkennbar, dass die Seitenwandungen 56c, d die Trennstege 56f, g und den Wandbereich 56e überragen, so dass sich dadurch ein an die Ringkammern 56h-k angrenzender offener Ringraum als Verschaltungsbereich 56o ausbildet, in welchem die Verbindungsleiter 52a-c mit den Spulenanschlüssen 50b elektrisch verschaltet werden. Des Weiteren sind die Trennstege 56f,g an den Austrittspositionen der Spulenanschlüsse 50b zur Vermeidung von Kurzschlüssen gegenüber den Verbindungsleitern 52a-c mit Überhöhungen 56l versehen, welche wie in Fig. 6 ersichtlich als Auflage der Spulenanschlüsse 50b dienen. In dem Bodenbereich 56b ist eine den Spulenanschlüssen 50b entsprechende Anzahl von Fenstern 56m ausgebildet, durch welche die zunächst am Stator 16 axial ausgerichteten Spulenanschlüsse 50b hindurchgeführt werden.

Zur Verschaltung der Spulenanschlüsse 50b wird die in Fig. 4 dargestellte Baueinheit wie in Fig.1 schematisch gezeigt am Stator 16 angeordnet und mittels der Befestigungsabschnitte 62a-e dort fixiert. Es ist anhand des perspektivischen Statorausschnittes der Fig. 6 erkennbar, dass sich das Trägerelement 56 mit den Verbindungsleitern 52a, b, c somit unmittelbar axial benachbart zu den Austrittsbereichen der Spulenanschlüsse 50b aus den Spulen 36 befindet und diese radial überdeckt.

In Fig. 6 sind die Spulenanschlüsse bzw. Pins 50b bereits durch die in dem Trägerelement 56 ausgebildeten Fenster 56m hindurchgeführt und innerhalb des Ringraumes bzw. Verschaltungsbereiches 56o um 90° nach radial innen abgebogen, so dass diese zu den Verbindungsleitern 52a-c zunächst beabstandet sind und nur mit deren erhabenen Anschlussbereichen 52e in Anlage kommen. Dabei liegen die Pins 50b gleichzeitig an den dort ausgebildeten Überhöhungen 56l der Trennstege 56f, g auf und stützen sich dort ab. Man erkennt, dass jeweils zwei Spulenschlüsse 50b von jeweils zwei unmittelbar benachbarten Spulen 36 mit einem der Verbindungsleiter 52a-c elektrisch verschaltet sind. Die Kontaktierung erfolgt vorzugsweise stoffschlüssig, beispielsweise durch Löten oder Schweißen. Die erhabenen Anschlussbereiche 52e sind in Umfangsrichtung eines Verbindungsleiters 52a-c länger ausgeführt als sich die Spulenanschlüsse 50b in dieser Richtung erstrecken, so dass bei der Teilefertigung und/oder der Montage auftretende toleranzbedingte Positionierabweichungen der Kontaktstellen keine Probleme bereiten. Es ist ferner sichtbar, dass auch die u-förmigen Anschlussbereiche 50a mit den darin verbunden Wicklungsenden 36a, b durch die Fenster 56m hindurchgeführt sind und sich damit gleichfalls in dem Verschaltungsbereiches 56o befinden.

Zum Schutz der Verbindungsleiter 52a-c, der Spulenanschlüsse 50b und der Kontaktbereiche der Wicklungsenden 36a, b, sowie der Anschlussleiter 53a-c vor Korrosionserscheinungen und gleichfalls zur Erhöhung der Stabilität der Verschaltungseinrichtung wird der Verschaltungsbereich 56o des Trägerelementes 56 nach erfolgter Verschaltung komplett mit einem Dichtmittel, beispielsweise mit einem Harz oder Silikon vergossen, wobei auch die Fenster 56m und die an den Spulen herausstehenden Kontaktelemente 50, also auch der Kontaktabschnitte 50b vollständig gegenüber der Umgebung abgedichtet werden.

In einer zeichnerisch nicht dargestellten Abwandlung der erläuterten Verschaltungseinrichtung können die Pins 50b auch mit Schlitzen ausgeführt sein, wobei diese jeweils einen von einem Verbindungsleiter 52a-c abgebogenen Anschlussbereich aufnehmen und dort durch Verlöten, Verschweißen o.ä. verbunden werden können.

Die Anschlussbereiche der Verbindungsleiter 52a-c können auch in bereits bekannter Weise mit den Spulenanschlüssen eine Crimpverbindung eingehen. Dazu kann bevorzugt der Spulendraht oder ein Kontaktpin in einen aus dem Basisbereich und einem davon abstehenden Anschlussbereich gebildeten Bereich eingelegt und dann der abstehende Anschlussbereich umgebogen werden, wobei ein Spulenanschluss an dem Verbindungsleiter fixiert wird.

Alternativ zu dem erläuterten Ausführungsbeispiel können die Spulenanschlüsse auch unmittelbar durch die Wicklungsenden der Spulen gebildet werden.

Anstelle der dargestellten radialen Staffelung der Verbindungsleiter können diese auch axial gestaffelt zum Stator angeordnet und die weiteren Elemente sofern erforderlich entsprechend angepasst werden.

Auch ist die spezielle Bauart der elektrischen Maschine hinsichtlich der prinzipiellen Ausführung der Stator-Verschaltungseinrichtung unerheblich; es kann sich also beispielsweise auch um eine elektrische Maschine in Außenläuferbauart handeln.

## Patentansprüche

1. Stator (16) für eine als Innen- oder Außenläufermotor ausgeführte elektrische Maschine (10) umfassend
- ein ringförmiges Statorjoch (30), an dem in Umfangsrichtung eine Mehrzahl radial abragender Statorzähne (32) angeordnet ist,
- an den Statorzähnen (32) angeordnete Spulen (36) mit Spulenanschlüssen (50b),
- ein zu den Spulen (36) benachbart angeordnetes Trägerelement (56), welches einen einseitig offenen Ringraum ausbildet und wobei
- der Ringraum durch einen Boden (56a, b) und davon abstehenden Seitenwandungen (56c, d, e) des Trägerelements (56) begrenzt wird, wobei
- in dem Ringraum ringförmige Verbindungsleiter (52a-c) konzentrisch zueinander und elektrisch gegeneinander isoliert angeordnet sind, wobei
- das Trägerelement (56) Trennstege (56f, g) zur gegenseitig isolierten Anordnung der Verbindungsleiter (52a-c) aufweist, wobei
- die Seitenwandungen (56c, d) die Trennstege (56f, g) überragen, wobei
- innerhalb des Ringraums ein Verschaltungsbereich (56o) vorgesehen ist und wobei
- die Verbindungsleiter (52a-c) in dem Verschaltungsbereich (56o) in einer vorbestimmten Weise mit den Spulenanschlüssen (50b) verbunden sind,
**dadurch gekennzeichnet,**
**dass** die Spulenanschlüsse (50b) bezüglich des Stators (16) axial aus den Spulen (36) austreten und dass in einem Wandungsbereich (56b) des Trägerelementes (56) zu den Spulenanschlüssen (50b) korrespondierende Ausnehmungen (56m) ausgebildet sind, durch welche die Spulenanschlüsse (50b) in den Verschaltungsbereich (56o) des Trägerelementes (56) axial eingeführt sind, wobei der Wandungsbereich (56b) des Trägerelementes (56) einen Austrittsbereich der Spulenanschlüsse (50b) aus den Spulen (36) radial überdeckt.

2. Stator nach Anspruch 1,
**dadurch gekennzeichnet,**
**dass** eine Spule (36) mit zumindest einem Isolierkörper (40) an einem Zahn (32) angeordnet ist, wobei die Spulenanschlüsse (50b) an dem Isolierkörper (40) festgelegt sind.

3. Stator nach Anspruch 1 oder 2,
**dadurch gekennzeichnet,**
**dass** sich das Trägerelement (56) an mehreren Isolierkörpern (40) am Stator (16) abstützt.

4. Stator nach einem der Ansprüche 1-3,
**dadurch gekennzeichnet,**
**dass** die Spulenanschlüsse unmittelbar durch Wicklungsenden (36a, b) der Spulen (36) gebildet werden.

5. Stator nach einem der Ansprüche 1-3,
**dadurch gekennzeichnet,**
**dass** die Spulenanschlüsse (50b) durch Kontaktelemente (50) gebildet werden, die an den Isolierkörpern (40) festgelegt und mit den Spulenenden (36a, b) verbunden sind.

6. Stator nach Anspruch 5,
**dadurch gekennzeichnet,**
**dass** die Kontaktelemente (50) Kontaktabschnitte (50a) zur Verbindung mit den Wicklungsenden (36a,b) aufweisen.

7. Stator nach einem der Ansprüche 1-6,
**dadurch gekennzeichnet,**
**dass** die Kontaktabschnitte (50a) mit den Wicklungsenden (36a, b) durch die Ausnehmungen (56m) in den Verschaltungsbereich (56o) des Trägerelementes (56) eingeführt sind.

8. Stator nach einem der Ansprüche 1-7,
**dadurch gekennzeichnet,**
**dass** die Trennstege (56f, g) die Verbindungsleiter (52a-c) zumindest abschnittweise überragen.

9. Stator nach einem der Ansprüche 1-8,
**dadurch gekennzeichnet,**
**dass** die Verbindungsleiter (52a-c) von diesen abstehende Anschlussbereiche (52e) zur Verbindung mit den Spulenanschlüssen (50b) aufweisen.

10. Stator nach Anspruch 9,
**dadurch gekennzeichnet,**
**dass** die Anschlussbereiche (52e) als Präge- oder Stanzelemente an den Verbindungsleitern (52a-c) ausgebildet sind.

11. Stator nach einem der Ansprüche 1-10,
**dadurch gekennzeichnet,**
**dass** die Verbindungsleiter (52a-c) axial gestaffelt am Stator (16) angeordnet sind.

12. Stator nach einem der Ansprüche 1-11,
**dadurch gekennzeichnet,**
**dass** die Verbindungsleiter (52a-c) radial gestaffelt am Stator (16) angeordnet und die Spulenanschlüsse (50b) innerhalb des Trägerelementes (56) abgewinkelt sind.

13. Stator gemäß einem der Ansprüche 1-12,
**dadurch gekennzeichnet,**
**dass** der Verschaltungsbereich (56o) des Trägerelements (56) mit einem Dichtmittel verschlossen oder vergossen ist.

14. Stator nach einem der Ansprüche 1-13,
**dadurch gekennzeichnet,**
**dass** die Verbindungsleiter (52a-c) zum Anschluss des Stators (16) an eine Stromversorgungseinrichtung mit Anschlussleitern (53a-c) verbunden sind.

15. Stator nach Anspruch 14,
**dadurch gekennzeichnet,**
**dass** die Anschlussleiter (53a-c) in einen am Trägerelement (56) ausgebildeten oder mit diesem verbundenen Einlegeabschnitt (58) angeordnet sind.

## Claims

1. Stator (16) for an electrical machine (10) which is designed as an internal- or external-rotor motor, comprising
- an annular stator yoke (30) on which a plurality of radially protruding stator teeth (32) is arranged in the circumferential direction,
- coils (36) which are arranged on the stator teeth (32) and have coil connections (50b),
- a support element (56) which is arranged adjacent to the coils (36) and forms an annular space which is open on one side, and wherein
- the annular space is delimited by a base (56a, b) and side walls (56c, d, e), which protrude from the said base, of the support element (56), wherein
- annular connecting conductors (52a-c) are arranged in the annular space concentrically in relation to one another and electrically insulated from one another, wherein
- the support element (56) has separating webs (56f, g) for arranging the connecting conductors (52a-c) in a mutually insulated manner, wherein
- the side walls (56c, d) project beyond the separating webs (56f, g), wherein
- a connection region (56o) is provided inside the annular space, and wherein
- the connecting conductors (52a-c) in the connection region (56o) are connected to the coil connections (50b) in a predetermined manner,
**characterized**
**in that** the coil connections (50b) extend out of the coils (36) axially with respect to the stator (16), and in that recesses (56m) which correspond to the coil connections (50b) are formed in a wall region (56b) of the support element (56), the coil connections (50b) being axially inserted into the connection region (56o) of the support element (56) through the said recesses, wherein the wall region (56b) of the support element (56) radially covers an exit region of the coil connections (50b) out of the coils (36).

2. Stator according to Claim 1,
**characterized**
**in that** a coil (36) with at least one insulating body (40) is arranged on a tooth (32), wherein the coil connections (50b) are fixed to the insulating body (40) .

3. Stator according to Claim 1 or 2,
**characterized**
**in that** the support element (56) is supported on a plurality of insulating bodies (40) on the stator (16).

4. Stator according to one of Claims 1-3,
**characterized**
**in that** the coil connections are formed directly by winding ends (36a, b) of the coils (36).

5. Stator according to one of Claims 1-3,
**characterized**
**in that** the coil connections (50b) are formed by contact elements (50) which are fixed to the insulating bodies (40) and connected to the coil ends (36a, b).

6. Stator according to Claim 5,
**characterized**
**in that** the contact elements (50) have contact sections (50a) for connection to the winding ends (36a, b).

7. Stator according to one of Claims 1-6,
**characterized**
**in that** the contact sections (50a) with the winding ends (36a, b) are inserted into the connection region (56o) of the support element (56) through the recesses (56m).

8. Stator according to one of Claims 1-7,
**characterized**
**in that** the separating webs (56f, g) project beyond the connecting conductors (52a-c) at least in sections.

9. Stator according to one of Claims 1-8,
**characterized**
**in that** the connecting conductors (52a-c) have connection regions (52e), which protrude from the said connecting conductors, for connection to the coil connections (50b).

10. Stator according to Claim 9,
**characterized**
**in that** the connection regions (52e) are designed as stamped or punched elements on the connecting conductors (52a-c).

11. Stator according to one of Claims 1-10,
**characterized**
**in that** the connecting conductors (52a-c) are arranged on the stator (16) in an axially staggered manner.

12. Stator according to one of Claims 1-11,
**characterized**
**in that** the connecting conductors (52a-c) are arranged on the stator (16) in a radially staggered manner and the coil connections (50b) inside the support element (56) are angled.

13. Stator according to one of Claims 1-12,
**characterized**
**in that** the connection region (56o) of the support element (56) is closed or cast using a sealing means.

14. Stator according to one of Claims 1-13,
**characterized**
**in that** the connecting conductors (52a-c) are connected to connection conductors (53a-c) for the purpose of connecting the stator (16) to a power supply device.

15. Stator according to Claim 14,
**characterized**
**in that** the connection conductors (53a-c) are arranged in an insertion section (58) which is formed on the support element (56) or is connected to the said support element.

## Revendications

1. Stator (16) pour une machine électrique (10) réalisée sous forme de moteur à rotor intérieur ou à rotor extérieur, comprenant
- une culasse de stator annulaire (30) sur laquelle est disposée une pluralité de dents de stator (32) faisant saillie radialement dans la direction périphérique,
- des bobines (36) disposées sur les dents de stator (32), avec des raccords de bobines (50b),
- un élément de support (56) disposé à côté des bobines (36), qui constitue un espace annulaire ouvert d'un côté et
- l'espace annulaire étant limité par un fond (56a, b) et des parois latérales (56c, d, e),de l'élément support (56), faisant saillie depuis celui-ci,
- des conducteurs de connexion annulaires (52a-c) étant disposés dans l'espace annulaire concentriquement les uns aux autres et de manière isolée électriquement les uns par rapport aux autres,
- l'élément de support (56) présentant des nervures de séparation (56f, g) pour l'agencement des conducteurs de connexion (52a-c) de manière isolée électriquement les uns des autres,
- les parois latérales (56c, d) faisant saillie au-delà des nervures de séparation (56f, g),
- une région de raccordement (56o) étant prévue à l'intérieur de l'espace annulaire et
- les connecteurs de connexion (52a-c) étant connectés dans la région de raccordement (56o) de manière prédéterminée aux raccords de bobiness (50b),
**caractérisé en ce que** les raccords de bobines (50b) sortent axialement hors des bobines (36) par rapport au stator (16) et **en ce que** des évidements (56m) correspondant aux raccords de bobines (50b) sont réalisés dans une région de paroi (56b) de l'élément de support (56), à travers lesquels évidements les raccords de bobines (50b) sont introduits axialement dans la région de raccordement (56o) de l'élément de support (56), la région de paroi (56b) de l'élément de support (56) recouvrant radialement une région de sortie des raccords de bobines (50b) hors des bobines (36) .

2. Stator selon la revendication 1,
**caractérisé en ce qu'**
une bobine (36) est disposée avec au moins un corps isolant (40) sur une dent (32), les raccords de bobiness (50b) étant fixés sur le corps isolant (40) .

3. Stator selon la revendication 1 ou 2,
**caractérisé en ce que**
l'élément de support (56) s'appuie sur plusieurs corps isolants (40) au niveau du stator (16).

4. Stator selon l'une quelconque des revendications 1 à 3,
**caractérisé en ce que**
les raccords de bobines sont formés directement par des extrémités d'enroulement (36a,b) des bobines (36).

5. Stator selon l'une quelconque des revendications 1 à 3,
**caractérisé en ce que**
les raccords de bobines (50b) sont formés par des éléments de contact (50) qui sont fixés aux corps isolants (40) et qui sont connectés aux extrémités de bobines (36a,b).

6. Stator selon la revendication 5,
**caractérisé en ce que**
les éléments de contact (50) présentent des portions de contact (50a) pour la connexion aux extrémités d'enroulement (36a,b).

7. Stator selon l'une quelconque des revendications 1 à 6,
**caractérisé en ce que**
les portions de contact (50a) sont introduites avec les extrémités d'enroulement (36a,b) à travers les évidements (56m) dans la région de raccordement (56o) de l'élément de support (56).

8. Stator selon l'une quelconque des revendications 1 à 7,
**caractérisé en ce que**
les nervures de séparation (56f, g) dépassent au moins en partie des conducteurs de connexion (52a-c) .

9. Stator selon l'une quelconque des revendications 1 à 8,
**caractérisé en ce que**
les conducteurs de connexion (52a-c) présentent des régions de raccordement faisant saillie depuis ceux-ci (52e) pour la connexion aux raccords de bobiness (50b).

10. Stator selon la revendication 9,
**caractérisé en ce que**
les régions de raccordement (52e) sont réalisées sous forme d'éléments de gaufrage ou d'estampage sur les conducteurs de connexion (52a-c).

11. Stator selon l'une quelconque des revendications 1 à 10,
**caractérisé en ce que**
les conducteurs de connexion (52a-c) sont disposés de manière échelonnée axialement sur le stator (16) .

12. Stator selon l'une quelconque des revendications 1 à 11,
**caractérisé en ce que**
les conducteurs de connexion (52a-c) sont disposés de manière échelonnée axialement sur le stator (16) et les raccords de bobiness (50b) sont coudés à l'intérieur de l'élément de support (56).

13. Stator selon l'une quelconque des revendications 1 à 12,
**caractérisé en ce que**
la région de raccordement (56o) de l'élément de support (56) est fermée ou coulée avec un agent d'étanchéité.

14. Stator selon l'une quelconque des revendications 1 à 13,
**caractérisé en ce que**
les conducteurs de connexion (52a-c) pour le raccordement du stator (16) à un dispositif d'alimentation électrique sont connectés à des conducteurs de raccordement (53a-c).

15. Stator selon la revendication 14,
**caractérisé en ce que**
le conducteur de raccordement (53a-c) est disposé dans une portion d'insertion (58) réalisée sur l'élément de support (56) ou connectée à celui-ci.
